Europäisches Patentamt

European Patent Office

Office européen des brevets

(11) Veröffentlichungsnummer: **0 053 089**
**B1**

(12) **EUROPÄISCHE PATENTSCHRIFT**

(45) Veröffentlichungstag der Patentschrift :
25.07.84

(51) Int. Cl.³ : **F 16 L   3/08**, F 16 B   7/08

(21) Anmeldenummer : **81730075.9**

(22) Anmeldetag : **19.08.81**

(54) **Rohrschelle.**

(30) Priorität : **20.11.80 DE 3044008**

(43) Veröffentlichungstag der Anmeldung :
**02.06.82 Patentblatt 82/22**

(45) Bekanntmachung des Hinweises auf die Patenterteilung : **25.07.84 Patentblatt 84/30**

(84) Benannte Vertragsstaaten :
**AT BE CH DE FR GB IT LI NL**

(56) Entgegenhaltungen :
**DE-A- 2 541 967**
**DE-B- 2 907 850**
**DE-B- 2 943 625**

(73) Patentinhaber : **Combé, Hubert**
**Lankwitzer Strasse 39**
**D-1000 Berlin 42 (DE)**

(72) Erfinder : **Combé, Hubert**
**Lankwitzer Strasse 39**
**D-1000 Berlin 42 (DE)**

(74) Vertreter : **Butenschön, Antje**
**Patentanwalt Kanzlei Henkel, Pfenning, Feiler, Hänzel, Meinig Kurfürstendamm 170**
**D-1000 Berlin 15 (DE)**

Jouve, 18, rue St-Denis, 75001 Paris, France

EP 0 053 089 B1

**Beschreibung**

Die Erfindung geht aus von einer Rohrschelle gemäß dem Oberbegriff der Ansprüche 1 bis 3.

Es ist durch die DE-C-29 07 850 eine derartige Rohrschelle mit wahlweise starr oder gelenkig mit der Rohrschelle verbundenem Verbindungsteil bekannt, allerdings gibt es für den Hersteller wie für den Anwender dieser bekannten Schelle noch Nachteile.

Diese sind :

Wenn im Falle der starren Verbindung ein Drehmoment wirksam wird, das das Verbindungsteil aus seiner Lage gegenüber den Schellenschenkeln herausdrehen will, kommt es darauf an, daß die Profilierungen in den Schellenschenkeln herausdrehen will, kommt es darauf an, daß die Profilierungen in den Schellenschenkeln steif genug sind, um die dann auftretenden großen Kräfte aufzunehmen. Diese Profilierungen liegen nicht im Druckbereich des Spannschraubenkopfes und der Spannschraubenmutter und erfahren von da keine Unterstützung. Die Schellenschenkel müssen deshalb sehr stark sein, was die Herstellung der Schelle verteuert.

Das Verbindungsteil benötigt auch zwei Berührungsflächenpaare, um die starre und die bewegliche Verbindung des Verbindungsteils mit der Schelle ermöglichen zu können und ebenso für jedes Berührungsflächenpaar eine Durchgangsbohrung für die Spannschraube, die das Verbindungsteil mit den Schellenschenkeln zusammenhält. Da, wo diese Bohrungen sind, insbesondere da, wo sie sich kreuzen, hat die weitere Bohrung für den Halt des Befestigungsteils (z. B. Gewindestange), die zu den genannten Bohrungen senkrecht steht, im Verbindungsteil an dieser Stelle keinen Platz. Aus diesen Gründen wird das Verbindungsteil groß und teuer.

Ferner gibt es im Falle der starren Verbindung der Schelle mit dem Verbindungsteil nur eine Einstellmöglichkeit und im Falle der beweglichen Verbindung nur einen kleinen Schwenkbereich.

Die Erfindung verfolgt den Zweck, diese Nachteile zu beseitigen.

Ihr liegt demgemäß die Aufgabe zugrunde, bei gleichzeitiger Vergrößerung der Kraftübertragungsmöglichkeit die Anzahl der erforderlichen Berührungsflächen zu halbieren, den Einstellbereich des Verbindungsteils zu vergrößern und sowohl das Verbindungsteil als auch die Schellenschenkel in ihren Abmessungen zu verringern.

Diese Aufgabe wird durch die im kennzeichnenden Teil der Ansprüche 1, 2 oder 3 angegebenen Merkmale gelöst.

Neben dem großen Vorteil, der in der Verbesserung der Kraftübertragung durch die verzahnten Flächen im Druckkegel der Spannschraubenkraft besteht, ist besonders vorteilhaft, daß das Verbindungsteil nur noch ein Berührungsflächenpaar hat. Es entfallen im Falle des Anspruchs 4 sogar zwei Bohrungen für die Spannschrauben, wodurch Platz für die Gewindebohrung des Befestigungsteils (z. B. Gewindestange) geschaffen werden kann. Das Verbindungsteil wird in diesem Fall sehr klein und symmetrisch, was neben Materialersparnis eine kostensparende Fabrikation auf Kaltumformpressen ermöglicht.

Im Fall aller Ansprüche kann das Verbindungsteil im Fall der starren Verbindung mit den Schellenschenkeln in jeder praktisch erforderlichen Lage einrasten, und es ist im Fall der beweglichen Verbindung voll um die gemeinsame Achse der Schraubenbolzen drehbar.

Wenn im Fall der starren Verbindung ein Drehmoment wirksam wird, das das Verbindungsteil aus seiner Lage gegenüber den Schellenschenkeln herausdrehen will, wirkt die auftretende Kraft auf die ringförmigen verzahnten Berührungsflächen zwischen Verbindungsteil und Schellenschenkeln. Aus statischen Gründen genügt es, daß diese Flächen so klein sind, daß sie den Bereich der Spannkegel der Muttern der Schraubenbolzen bzw. des Schraubenkopfes nicht überschreiten. In diesem Bereich ist eine Verbiegung der Schellenschenkel nicht möglich und demzufolge auch keine Verstärkung der Schellenschenkel erforderlich.

Auch die Schellenschenkel können also in ihren äußeren Abmessungen, insbesondere der Schenkellänge, kleiner als bei der bekannten Lösung ausgeführt werden, was wesentliche Montagevorteile für den Anwender hat und zusätzlich bei der Isolierung der Rohrleitung vermeidet, daß die Schellenschenkel über die Isolierung hinausragen.

Jeder Zahn in der ringförmigen verzahnten Fläche formt mit seinen schrägen Flanken einen Teil der Kraft des Drehmomentes in Zugkraft auf den Schraubenbolzen um und erhöht so die Flächenpressung und damit die Reibungskraft auf den schrägen Zahnflächen, die aufeinander gespannt sind. Hierdurch wird die die Zähne belastende Reaktionskraft, die aus Formschluß resuliert, entlastet, und zwar um den Reibungswiderstand, der in der Summe der belasteten schrägen Zahnflächen entsteht.

Weitere vorteilhafte Merkmale ergeben sich aus den abhängigen Ansprüchen.

Die Merkmale der Erfindung und deren technische Vorteile ergeben sich auch aus der nachfolgenden Beschreibung von Ausführungsbeispielen.

Es zeigen :

Figur 1 eine Explosions-Darstellung der Schelle mit Verbindungs- und mit Befestigungsteil.

Figur 2 einen Schnitt durch die Mittelachse des Verbindungsteils und die zugehörigen Schellenschenkel, aus dem insbesondere die Lage der von den Muttern ausgehenden Druckkegel hervorgeht.

Figuren 3a und 3b eine Prinzipskizze für das dreieckige Zahnprofil im inneren und eine für das dreieckige Zahnprofil im äußeren Bereich der ringförmigen Verzahnung.

Figuren 4a und 4b eine Prinzipskizze für das trapezförmige Zahnprofil im inneren und eine für das trapezförmige Zahnprofil im äußeren Bereich der ringförmigen Verzahnung.

Figuren 5a und 5b eine Ansicht einer ringförmigen verzahnten Fläche mit Spiralverzahnung und trapezförmigem Zahnprofil rechtsdrehend kombiniert mit der Ansicht einer Zwischenscheibe, und eine Ansicht mit linksdrehendem Zahnprofil.

Figur 6 die Wirkungsweise des Nichteinrastens bei zwei aufeinanderliegenden ringförmigen verzahnten Flächen, die beide mit gleichartigen rechtsdrehenden Spiralverzahnungen versehen sind.

Figur 7 die Wirkungsweise des Nichteinrastens bei zwei aufeinanderliegenden ringförmigen verzahnten Flächen, deren Zähne kreisbogenartig gekrümmt sind, als ein weiteres Beispiel.

Figuren 8a und 8b die Wirkungsweise des Nichteinrastens bei zwei aufeinanderliegenden ringförmigen verzahnten Flächen, wovon eine grobe und die andere eine feine sternartige Verzahnung hat.

Figur 9 ein Verbindungsteil mit einer Bohrung für die Aufnahme einer Spannschraube und fest angeformtem Befestigungsteil mit Außengewinde, ähnlich DIN 444.

Figuren 10a und 10b ein Verbindungsteil gemäß Fig. 9, jedoch mit Innengewinde für das Befestigungsteil, in zwei Ansichten.

Figuren 11a, 11b, 11c verschiedene Schellenformen, für die die Erfindung geeignet ist.

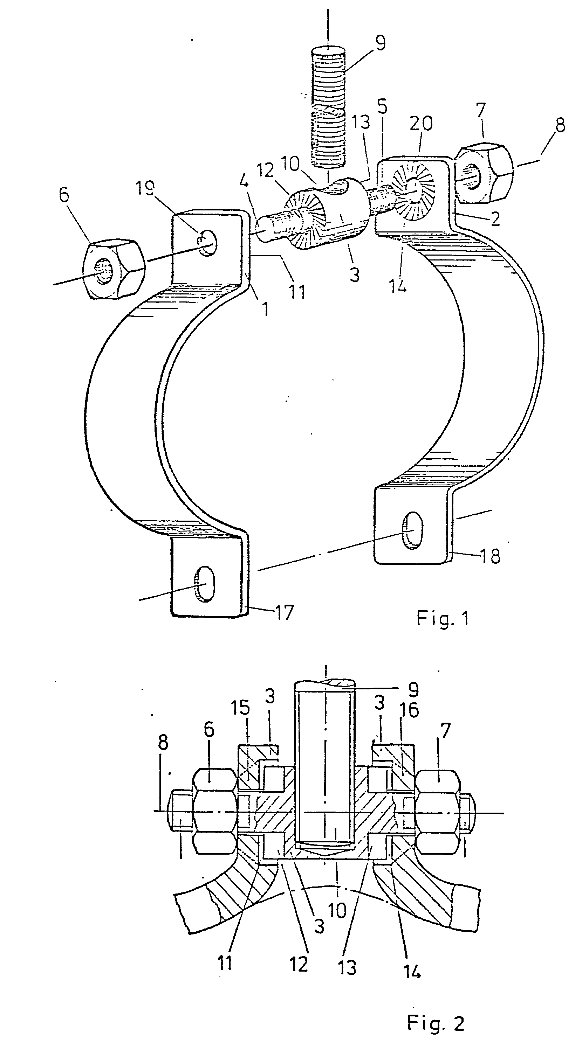

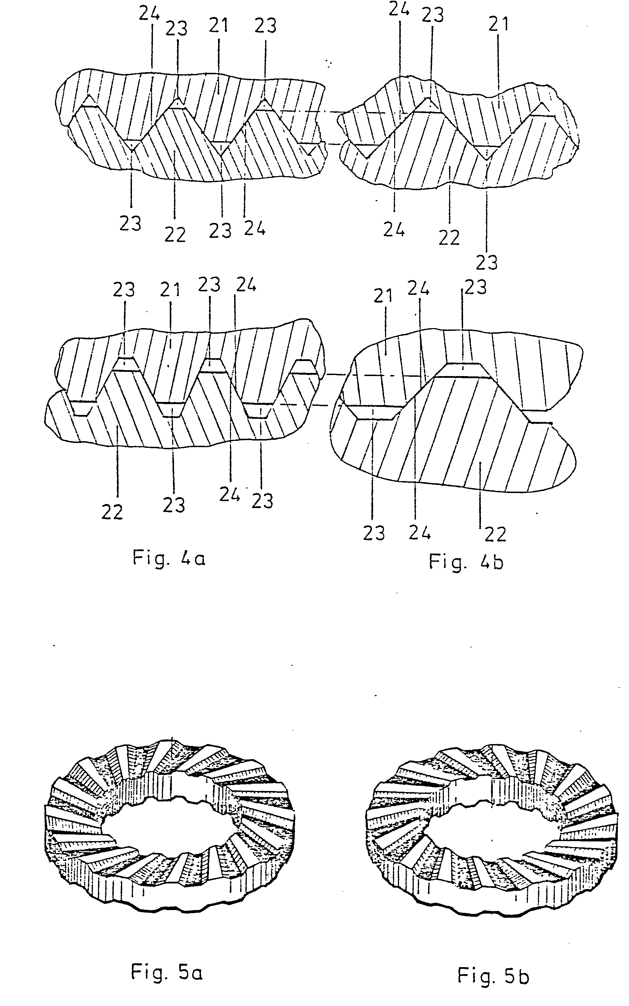

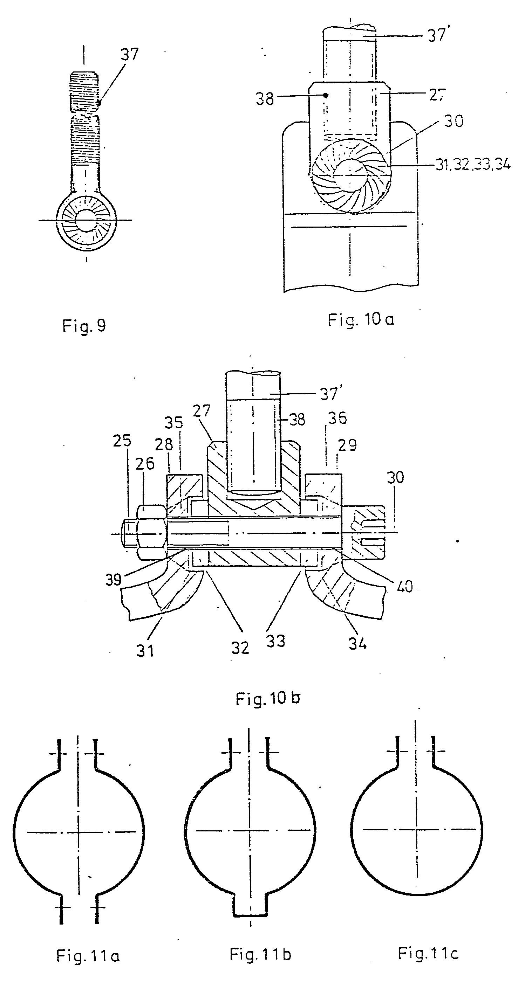

Die Rohrschelle bzw. die Rohrschellenhälften nach Fig. 1 bzw. Fig. 11a, 11b, 11c weisen mindestens ein Schenkelpaar 1, 2 auf, das sich gegenüberliegt. Beide Schenkel 1, 2 sind mit je einem Loch 19, 20 versehen und mit je einer ringförmigen Verzahnungsfläche 11, 14 um dieses Loch herum. Die Rohrschelle bzw. die Rohrschellenhälften sind auf Pressen hergestellte Stanzteile aus Blech oder Bandmaterial, insbesondere in der Stahlqualität St 52.

Das Verbindungsteil 3 (Fig. 1) hat zwei angeformte Gewindebolzen 4, 5, die in einer Achse 8 liegen und mit Spannmuttern 6,7 versehen sind. Außerdem hat das Verbindungsteil senkrecht zur Gewindebolzenachse 8 eine Bohrung 10 mit Gewinde für das Befestigungsteil 9, das z. B. eine Gewindestange sein kann. Diese Bohrung 10 ist mit einer Sicherung gegen Lösen des Gewindes versehen. Verbindungsteil 3 und Befestigungsteil 9 können auch eine Einheit bilden. Am Verbindungsteil 3 sind ringförmige Verzahnungsflächen 12, 13 um die Schraubenbolzen 4, 5 herum angeordnet, mit den ringförmigen Verzahnungsflächen 11, 14 der Schellenschenkel 1, 2 zusammenwirken.

Das Verbindungsteil 3 kann z. B. aus QC 22, Werkstoff 1.1152 nach DIN 1654 hergestellt sein.

Von den Spannmuttern 6, 7 gehen Spannungskegel 15, 16 (Fig. 2) aus, die sich im Material der Schellenschenkel 1, 2 aufbauen und auf die ringförmigen verzahnten Flächen 11, 12, 13, 14 wirken.

In Fig. 3a und 3b und 4a und 4b ist der Schnitt durch ineinandergreifende Zähne zweier verzahnter Bereiche 21, 22 im Prinzip dargestellt. Da die Spitzen der Zähne abgeschnitten sind, verbleibt ein Freiraum 23 zwischen den fehlenden Spitzen und den Tälern der verzahnten Bereiche, während die schrägen Flächen 24 fest aufeinander gepreßt werden können. In den Freiraum 23 können beim Einrasten der verzahnten Bereiche 21, 22 die unter Baustellenbedingungen zu erwartenden Verunreinigungen entweichen, so daß auf den schrägen Flächen 24 zusätzlich zum Widerstand der Zähne die volle Reibungskraft wirksam werden kann.

Die Höhe der einzelnen Zähne innerhalb einer ringförmigen verzahnten Fläche kann überall gleich sein (Fig. 3a, 3b), wenn auch die Zähne aus geometrischen Gründen im äußeren Teil der verzahnten Ringfläche breiter werden (Fig. 3b). Die schrägen Flächen 24 der Zähne sind dann gekrümmte Flächen. In diesem Fall ist die Prägung der ringförmigen verzahnten Flächen 11, 12, 13, 14 erleichtert, da bei gleich hohen Zähnen keine ungleichmäßige Verdichtung des Materials erfolgen muß.

Fig. 5a und 5b zeigen jeweils die Ansicht einer ringförmigen verzahnten Fläche mit schräg gegenüber den Radien verlaufenden Zähnen, die gleich hoch sind, und zwar eine mit rechtsdrehenden Zähnen und eine mit linksdrehenden Zähnen, angewandt bei einer Zwischenscheibe mit beidseitigen verzahnten Flächen.

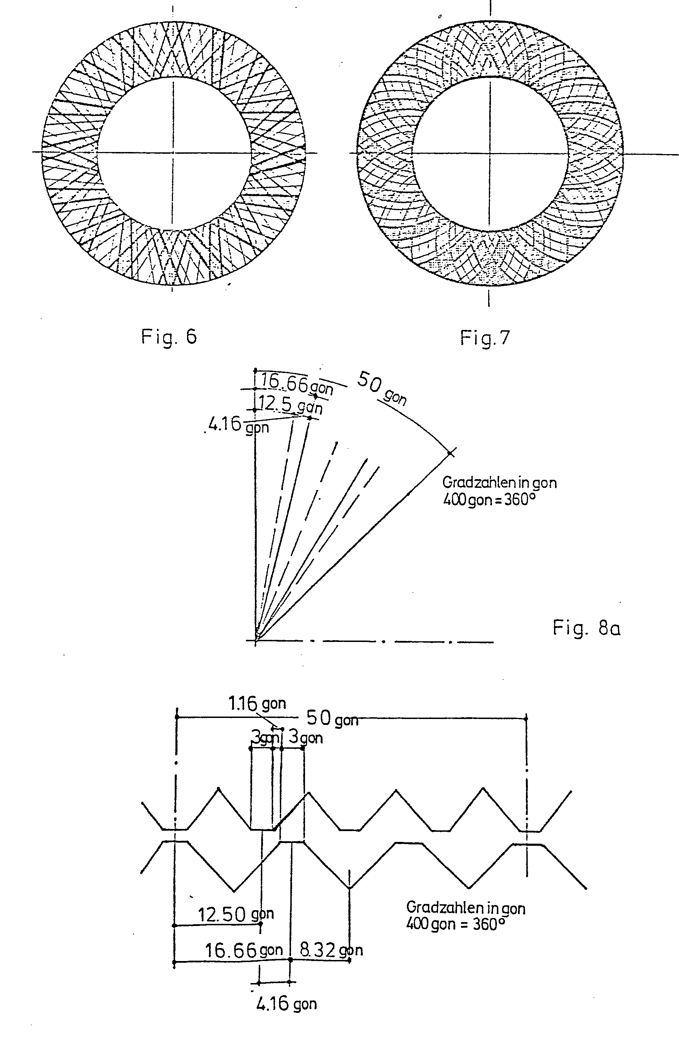

Fig. 6 zeigt die Oberfläche der abgeschnittenen Zähne in einer ringförmigen verzahnten Fläche mit rechtsdrehenden Zähnen und die einer zweiten rechtsdrehenden Ringverzahnung gleicher Art, die auf die erste gelegt wurde. Da diese Oberflächen der Zahnköpfe in einer Ebene liegen und sich stets überschneiden, ist klar, daß diese Verzahnungen glatt aufeinander gleiten müssen.

Sinngemäßes gilt für Verzahnungen mit grober und feiner Teilung. Geht man von Zähnen aus, die eine abgeschnittene Spitze wie bei Fig. 3a, 3b, 4a, 4b haben und deren Kanten gerade verlaufen, so können diese Zähne in der ringförmigen verzahnten Fläche gleichmäßig verteilt über eine volle Drehung von 400 gon = 360° so angeordnet werden, daß ihre Kanten auf den Mittelpunkt bzw. die Mittelachse der ringförmigen Fläche zulaufen.

Nimmt man nun beispielsweise eine grobe Teilung mit 400 gon : (3 · 8) = 16,66 gon und eine feine Teilung mit 400 gon : (4 · 8) = 12,5 gon an, so ist klar, daß die grobe Verzahnung am Schellenschenkel 1 und die feine Verzahnung am Verbindungsteil 3 in eine zu ihr passende ihr gegenüberliegende feine Verzahnung am Schellenschenkel 2 einrasten kann, und zwar jede für sich an so viel Stellen, wie Zähne pro Verzahnung vorhanden sind. Beide zugleich können einrasten in einem Raster von 400 gon : 8 = 50 gon (Fig. 8a).

Die Differenz des Teilungswinkels von Zahn zu Zahn der groben Verzahnung und des Teilungswinkels von Zahn zu Zahn der feinen Verzahnung beträgt in diesem Beispiel 16,66 gon — 12,5 gon = 4,16 gon.

3

Nimmt man nun weiter an — unabhängig davon, ob die Verzahnung grob oder fein ist —, daß die an einem Zahn abgeschnittene Zahnspitze eine Zahnspitzenfläche mit einem Winkelbereich von 3 gon ergibt, so kann man zunächst den Fall betrachten, daß die feine Verzahnung auf der groben aufliegt, und zwar soß daß die Zahnspitzenfläche jedes 4. groben Zahnes und die Zahnspitzenfläche jedes 5. feinen Zahnes genau aufeinanderliegen (Fig. 8a, Fig. 8b). Dann haben die Zahnspitzenflächen eines unmittelbar diesem sich deckenden Zahnflächenpaares benachbarten und sich gegenüberliegenden Zahnpaares, also eines groben Zahnes und eines feinen Zahnes, einen Winkelabstand zueinander von 4,16 gon − 2 · 1,5 gon = 1,16 gon.

Verdreht man nun die aufeinanderliegenden ringförmigen Flächen mit grober und feiner Verzahnung gegeneinander um ihre gemeinsame Mittelachse, so haben die Zahnspitzenflächen dieses benachbarten Zahnpaares schon nach 1,16 gon Drehung Kontakt zueinander. Es bedarf aber einer Gesamtdrehung von 3 gon, bis das erste Zahnspitzenflächenpaar seinen Kontakt zueinander verliert.

So liegen also in diesem Beispiel mindestens 8 Zahnspitzenflächenpaare aufeinander, und zwar im Winkelabstand von 50 gon, so daß die aufeinanderliegende grobe und feine Verzahnung nicht einrasten können, sondern aufeinander gleiten müssen.

Die verzahnte Ringfläche 11 des Schellenschenkels 1 und die verzahnte Ringfläche 14 des Schellenschenkels 2 sowie die beiden verzahnten Ringflächen 12 und 13 des Verbindungsteils 3 können nun beispielsweise mit Spiralverzahnungen gemäß Fig. 5a und 5b versehen werden, die spiegelbildlich sind, d. h., die « Drehrichtung » der Spiralverzahnung ist verschieden. Bezeichnet man die eine Drehrichtung mit R für rechtsdrehend und die andere mit L für linksdrehend, so sind u. a. folgende Prägungen auf den Schellenschenkeln 1, 2 und auf dem Verbindungsteil 3 möglich :

|  | Schenkel 1 | Verbindungsteil | | Schenkel 2 |
|---|---|---|---|---|
| Berührungsringfläche | 11 | 12 | 13 | 14 |
| Drehrichtung | R | L | R | L |

Werden die Bauteile nach diesem Prinzip zusammengespannt, ist die starre Verbindung verwirklicht.

Dreht man das Verbindungsteil 3 um die Achse des Befestigungsbolzens 9 um zwei rechte Winkel, dann kommt folgende Anwendung zustande :

|  | Schenkel 1 | Verbindungsteil | | Schenkel 2 |
|---|---|---|---|---|
| Berührungsringfläche | 11 | 13 | 12 | 14 |
| Drehrichtung | R | R | L | L |

Damit ist bei unveränderten Bauteilen die bewegliche Verbindung verwirklicht.

Selbstverständlich gilt Sinngemäßes im Fall der strahlenförmigen Anordnung der Zähne. Nennt man die grobe Verzahnung G und die Feine F, so gilt dann

|  | Schenkel 1 | Verbindungsteil | | Schenkel 2 |
|---|---|---|---|---|
| Berührungsringfläche | 11 | 12 | 13 | 14 |
| Verzahnung | G | G | F | F |

für die starre Verbindung und

|  | | | | |
|---|---|---|---|---|
|  | 11 | 13 | 12 | 14 |
|  | G | F | G | F |

für die bewegliche Verbindung.

Die Gestaltungsmöglichkeiten der Verzahnungen der ringförmigen verzahnten Flächen 11, 12, 13, 14 sind mannigfaltig ; Fig. 7 zeigt ein weiteres Beispiel, das sinngemäß wie die Fig. 5 und deren Beschreibung zu verstehen ist.

In Fig. 5a und 5b sind Zwischenscheiben abgebildet. Eine solche Zwischenscheibe kann zwischen das Verbindungsteil 3 und den Schellenschenkel 1 oder (und) Schellenschenkel 2 geklemmt werden, wodurch ein anderer Schellendurchmesser verwirklicht wird. Eine solche Zwischenscheibe beeinträchtigt die Doppelfunktion der Schelle mit starrem oder beweglichem Übergang zwischen Schellenschenkel 1, 2 und Verbindungsteil 3 in keiner Weise. Mit solchen Zwischenscheiben kann sich der Rohrleger bei geringen Rohrdurchmesser-Differenzen helfen. Das gilt insbesondere für den Fall, daß die Rohrschelle aus einem Stück gemäß Fig. 11b oder Fig. 11c gefertigt ist.

Das Prinzip der Anwendung von ringförmigen verzahnten Berührungsflächen kann in sehr einfacher Weise nur für die Erzielung einer starren Verbindung genutzt werden. Hierfür kommt eine einfache Sternverzahnung in Frage, deren Zähne auf den Mittelpunkt der Ringfläche gerade zulaufen. Vertauscht man bei einer aus zwei Halbschellen bestehenden Schelle gemäß Fig. 1 beide Schellenschenkel, so daß der untere Schenkel 17 von Halbschelle 1 auf die ringförmige verzahnte Fläche 12 des Verbindungsteils 3 zu liegen kommt und Schenkel 18 von Halbschelle 2 auf die ringförmige verzahnte Fläche 13, dann ist auch wieder die bewegliche Verbindung hergestellt.

Fig. 9 zeigt ein Verbindungsteil ähnlich DIN 444 mit fest angeformtem Außengewindebolzen 37 als Befestigungsteil. Fig. 10a und die zugehörige Fig. 10b zeigen ein Verbindungsteil 27, bei dem ein Befestigungsteil 37' in einem Innengewinde 38 des Verbindungsteils 27 Aufnahme findet.

Sowohl im Fall des Verbindungsteils gemäß Fig. 9 wie im Fall des Verbindungsteils gemäß Fig. 10a, Fig. 10b durchdringt eine Schraube 25 mit Mutter 26 das Verbindungsteil. Sie preßt über die Mutter 26 und Kopf der Schraube 25 und über die Spannkegel 35, 36 die ringförmigen verzahnten Flächen 32, 33 des Verbindungsteils 27 und die ringförmigen verzahnten Flächen 31, 34 der Schellenschenkel 28, 29 aufeinander.

Diese Lösung ermöglicht den Ersatz des Verbindungsteils 3 durch gewöhnliche Augenschrauben nach DIN 444, die mit geeigneten Sternverzahnungen versehen sind, wobei das mit Außengewinde versehene Teil 37 als Befestigungsteil dient (Fig. 9).

Die Funktion entspricht sinngemäß der Funktionsbeschreibung der Abbildungen Fig. 1 bis Fig. 8b.

Es soll nicht unerwähnt bleiben, daß bei einer Schelle gemäß Fig. 1 und Fig. 11a, die aus zwei Halbschellen besteht, die Möglichkeit gegeben ist, das freie Schellenschenkelpaar 17, 18 mit verzahnten Ringflächen zu versehen und ein weiteres Befestigungsteil 3 anzubringen, z. B. zum Ankuppeln einer weiteren Rohrschelle oder zum Einspannen der Schellenhälften auf zwei Seiten, was z. B. bei Fall- und Steigesträngen von Rohrleitungen vorkommt.

**Ansprüche**

1. Rohrschelle zwischen deren Schenkeln (1, 2 ; 28, 29) ein Verbindungsteil (3 ; 27) eingeschoben ist, dessen Berührungsflächenpaar (12, 13 ; 32, 33) an den Schenkeln (1, 2 ; 28, 29) anliegt und das durch Schraube (4, 5 ; 25) und Mutter (6, 7 ; 26) mit den Schenkeln (1, 2 ; 28, 29) zusammengehalten ist und mit dem wahlweise eine starre oder eine gelenkige Verbindung des Verbindungsteils (3 ; 27) mit den Schenkeln (1, 2 ; 28, 29) ermöglicht ist, dadurch gekennzeichnet, daß jede der beiden Berührungsflächen des Berührungsflächenpaares eine ringförmige, um die Achse (8 ; 30) der Schraube (4, 5 ; 25) angeordnete verzahnte Fläche (12, 13 ; 32, 33) hat und daß ebenso jeder Schellenschenkel (1, 2 ; 28, 29) an seiner Berührungsfläche mit dem Verbindungsteil (3 : 27) mit einer entsprechenden ringförmigen verzahnten Fläche (11, 14 ; 31, 34) um die Achse (8 ; 30) bzw. das Schraubendurchgangsloch (19, 20 ; 39, 40) versehen ist, wobei die Verzahnungen der beiden ringförmigen Flächen (12, 13 ; 32, 33) des Verbindungsteils (3 ; 27) und der ihnen zugeordneten komplementären Verzahnungsfläche (11, 14 ; 31, 34) der Schenkel (1, 2 ; 28, 29) hinsichtlich Teilung und/oder Zahnverlauf derartig unterschiedlich ausgebildet sind, daß das Verbindungsteil (3 ; 27) in seiner einen Einbaulage durch Einrasten der Verzahnung starr mit den Schenkeln (1, 2 ; 28, 29) gekuppelt ist und in der zweiten Einbaulage bei vertauschten Verzahnungsflächen (13, 12 ; 33, 32) durch ständige Berührung eines Teils der Zahnkopfflächen gegenüber den Schenkeln (1, 2 ; 28, 29) verdrehbar ist.

2. Rohrschelle zwischen deren Schenkeln (1, 2, 28, 29) ein Verbindungsteil (3, 27) eingeschoben ist, dessen Berührungsflächenpaar (12, 13 ; 32, 33) an den Schenkeln (1, 2 ; 28, 29) anliegt und das durch Schraube (4, 5 ; 25) und Mutter (6, 7 ; 26) mit den Schenkeln (1, 2 ; 28, 29) zusammengehalten ist und mit dem wahlweise eine starre oder eine gelenkige Verbindung des Verbindungsteils (3 ; 27) mit den Schenkeln (1, 2 ; 28, 29) ermöglicht ist, dadurch gekennzeichnet, daß jede der beiden Berührungsflächen des Berührungsflächenpaares eine ringförmige, um die Achse (8, 30) der Schraube (4, 5 ; 25) angeordnete verzahnte Fläche (12, 13 ; 32, 33) hat und daß jeder Schellenschenkel (1, 2 ; 28, 29) an seiner Berührungsfläche mit dem Verbindungsteil (3 ; 27) mit einer entsprechenden ringförmigen verzahnten Fläche (11, 34 ; 31, 34) um die Achse (8, 30) bzw. das Schraubendurchgangsloch (19, 20 ; 39, 40) versehen ist, wobei die Verzahnung der beiden ringförmigen Flächen (12, 13 ; 32, 33) des Verbindungsteils (3 ; 27) und der ihnen zugeordneten komplementären Verzahnungsflächen (11, 14 ; 31, 34) der Schenkel (1, 2 ; 28, 29) hinsichtlich Teilung und/oder Zahnverlauf derartig ausgebildet sind, daß das Verbindungsteil (3 ; 27) durch Einrasten der Verzahnung starr mit den Schenkeln (1, 2 ; 28, 29) gekuppelt ist, während die bewegliche Verbindung zwischen Verbindungsteil (3 ; 17) den Schenkeln dadurch erreicht wird, daß je eine wenigstens einseitig glatte Zwischenscheibe zwischen die beiden benachbarten Verzahnungsflächen (11, 12, 13, 14 ; 31, 32, 33, 34) des Verbindungsteils (3 ; 27) und der Schellenschenkel (1, 2 ; 28, 29) einlegbar ist.

3. Zweigeteilte Rohrschelle zwischen deren Schenkeln (1, 2, 17, 18) ein Verbindungsteil (3) eingeschoben ist, dessen Berührungsflächenpaar an den Schenkeln (1, 2) anliegt und das durch Schraube (4, 5) und Mutter (6, 7) mit den Schenkeln (1, 2) zusammengehalten ist und mit dem wahlweise eine starre oder eine gelenkige Verbindung des Verbindungsteils (3) mit den Schenkeln (1, 2, 17, 18) ermöglicht ist, dadurch gekennzeichnet, daß jede der beiden Berührungsflächen des Berührungsflächenpaares eine ringförmige, um die Achse (8) der Schraube (4, 5) angeordnete verzahnte Fläche (12, 13) hat und daß zwei Schellenschenkel (1, 2) an ihrer Berührungsfläche mit dem Verbindungsteil (3) mit einer entsprechenden ringförmigen verzahnten Fläche (11, 14) um die Achse (8) bzw. das Schraubendurchgangsloch (19, 20) versehen sind, wobei die Verzahnungen der beiden ringförmigen Flächen (12, 13) des Verbindungsteils (3) und der ihnen zugeordneten komplementären Verzahnungsflächen (11, 14) der Schenkel (1, 2) hinsichtlich Teilung und/oder Zahnverlauf derartig ausgebildet sind, daß das Verbindungsteil (3) durch Einrasten der Verzahnung starr mit den Schenkeln (1, 2) gekuppelt ist, während das andere Schenkelpaar (17, 18) der zweigeteilten Rohrschelle glatte Anlageflächen aufweist, und die bewegliche Verbindung zwischen Verbindungsteil (3) und den Schenkeln dadurch erreicht wird, daß die glatten Anlageflächen der Schenkel (17, 18) die Verzahnungsflächen (12, 13) des Verbindungsteils (3) berühren.

4. Rohrschelle nach einem der Ansprüche 1-3, dadurch gekennzeichnet, daß das Verbindungsteil (3) für jede seiner beiden Berührungsflächen (12, 13) mit den Schellenschenkeln (1, 2) einen fest angeformten Schraubenbolzen (4, 5) mit Muttern (6, 7) hat und wobei beide Schraubenbolzen in einer Achse (8) liegen, ohne das Verbindungsteil zu durchdringen.

5. Rohrschelle nach einem der Ansprüche 1-3, dadurch gekennzeichnet, daß die Schraube (25) das Verbindungsteil (27) durchdringt und mit Mutter (26) versehen ist.

6. Rohrschelle nach einem der vorangegangenen Ansprüche, dadurch gekennzeichnet, daß die ringförmigen verzahnten Flächen (11, 12, 13, 14) mit Zähnen versehen sind, deren Querschnitte dreieckig mit abgeschnittenen Spitzen (Fig. 3a, 3b) oder trapezförmig (Flg. 4a, 4b) sind und wobei im eingerasteten Zustand der Verzahnung sich zwischen den Zahnspitzen und den Zahntälern jeweils ein Freiraum (23) befindet, während die schrägen Flächen (24) mit ihren jeweiligen Gegenstücken Kontakt haben.

7. Rohrschelle nach einem der vorangegangenen Ansprüche, dadurch gekennzeichnet, daß die Zahnhöhe der ringförmigen verzahnten Flächen überall konstant ist.

8. Rohrschelle nach einem der Ansprüche 1-3, dadurch gekennzeichnet, daß der Zahnverlauf an den ringförmigen verzahnten Flächen (11, 12, 13, 14) sowohl des Verbindungsteils (3) als auch der Schellenschenkel (1, 2) schräg gegenüber den Radien ist (Fig. 1) und daß der Zahnverlauf spiegelbildlich ist, d. h. rechtsdrehend in der ersten ringförmigen verzahnten Fläche (12) des Verbindungsteils (3) und linksdrehend in der zweiten ringförmigen verzahnten Fläche (13) (Fig. 5a, 5b).

9. Rohrschelle nach einem der Ansprüche 1-3, dadurch gekennzeichnet, daß der Zahnverlauf in den ringförmigen verzahnten Flächen (11, 12, 13, 14) sowohl des Verbindungsteils (3) als auch der Schellenschenkel (1, 2) bei gleichmäßiger Teilung strahlenförmig vom Mittelpunkt ausgeht (Fig. 8a), die Zahl der Zähne der ringförmigen verzahnten Flächen (12, 13) des Verbindungsteils (3) jedoch voneinander abweicht und die ringförmigen verzahnten Flächen (11, 14) der Schellenschenkel (1, 2) entsprechende Zähnezahlen aufweisen.

10. Rohrschelle nach einem der vorhergehenden Ansprüche, dadurch gekennzeichnet, daß zwischen dem Verbindungsteil (3) und den Schellenschenkeln (1, 2) mindestens eine Zwischenscheibe (Fig. 5a ; 5b) geklemmt ist und daß diese Zwischenscheibe beiderseits geeignete Verzahnungen trägt, insbesondere im Falle des Anspruchs 8 einerseits eine rechtsdrehende und andererseits eine linksdrehende verzahnte Ringfläche und im Falle des Anspruchs 9 beiderseits eine grobe oder beiderseits eine feine Sternverzahnung mit zentrisch zum Mittelpunkt verlaufenden Zähnen hat.

11. Rohrschelle nach einem der Ansprüche 1 oder 2, dadurch gekennzeichnet, daß im Fall einer Rohrschelle mit zwei Schenkeln (Fig. 11a) die freien Schellenschenkel ebenfalls mit ringförmigen verzahnten Flächen und einem entsprechenden Verbindungsteil mit ringförmigen verzahnten Flächen ausgerüstet sind.

12. Rohrschelle nach einem der vorhergehenden Ansprüche, dadurch gekennzeichnet, daß das Verbindungsteil (3, 27) ein Befestigungsteil (9, 37 ; 37′) aufweist, das entweder in eine Gewindebohrung (10, 38) des Verbindungsteils eingeschraubt oder damit einstückig ausgebildet ist.


## Claims

1. Pipe hanger between whose two ends (1,2 ; 28, 29) is inserted a joint part (3, 27), whose contact area pair (12, 13 ; 32, 33) engages with legs (1, 2 ; 28, 29) and is held together with the latter by screw (4, 5 ; 25) and nut (6, 7 ; 26) and which, as desired, permits a rigid or an articulated connection between joint part (3, 27) and legs (1, 2 ; 28, 29), characterized in that each of the two contact areas of the contact area pair has an annular serrated surface (12, 13 ; 32, 33) arranged around the axis (8, 30) of screw (4, 5 ; 25) and that in the same way each hanger leg (1, 2 ; 28, 29) is provided at its contact area with joint part (3, 27) with a corresponding annular serrated surface (11, 24 ; 31, 34) about the axis (8, 30) or the screw through bore (19, 20 ; 39, 40), the teeth of the two annular surfaces (12, 13 ; 32, 33) of the joint part (3, 27) and the associated complementary serrated surface (11, 14 ; 31, 34) of legs (1, 2 ; 28, 29) are so differently constructed with respect to pitch and/or tooth configuration, that the joint part (3, 27) is rigidly coupled to the legs (1, 2 ; 28, 29) by engagement of the teeth in one of its fitting positions, whilst in the second fitting position, with interchanged serrated surfaces (13, 12 ; 33, 32) it is rotatable with respect to legs (1, 2 ; 28, 29) by constant contact with part of the tooth faces.

2. Pipe hanger between whose two ends (1, 2 ; 28, 29) is inserted a joint part (3, 27), whose contact area pair (12, 13 : 32, 33) engages with legs (1, 2 ; 28, 29) and is held together with the latter by screws (4, 5 ; 25) and nut (6, 7 ; 26) and which, as desired, permits a rigid or an articulated connection between joint part (3, 27) and legs (1, 2 ; 28, 29) characterized in that each of the two contact areas of the contact area pair has an annular serrated surface (12, 13 ; 32, 33) arranged around the axis (8, 30) of screw (4, 5 ; 25) and that in the same way each hanger leg (1, 2 ; 28, 29) is provided at its contact area with joint part (3, 27) with a corresponding annular serrated surface (11, 13 ; 31, 34) about the axis (8, 30) or the screw through bore (19, 20 ; 39, 40), the teeth of the two annular surfaces (12, 13 ; 32, 33) of the joint part (3, 27) and the associated complementary serrated surface (11, 14 ; 31, 34) of legs (1, 2 ; 28, 29) constructed with respect to the pitch and/or tooth configuration in such a way that the joint part (3, 27) is rigidly coupled to the legs (1, 2 ; 28, 29) by an engagement of the teeth, whilst the movable connection between the joint part (3, 27) and the legs is achieved in that in each case one intermediate disk, which is smooth on at least one side, can be placed between the two adjacent serrated surfaces (11, 12, 13, 14 ; 31, 32, 33, 34) of joint part (3, 27) and hanger legs (1, 2 ; 28, 29).

3. Two-part pipe hanger between whose legs (1, 2 ; 17, 18) is inserted a joint part (3), whose contact area pair engages with legs (1, 2) and is held together with the legs (1, 2) by screw (4, 5) and nut (6, 7) and which, as required, permits a rigid or an articulated connection of joint part (3) to legs (1, 2 ; 17, 18), characterized in that each of the two contact areas of the contact area pair has an annular serrated surface (12, 13) arranged around the axis (8) of screw (4, 5) and that two hanger legs (1, 2) at their contact area with the joint part (3) are provided with a corresponding annular serrated surface (11, 14) about the axis (8) or the screw through bore (19, 20), the teeth of the two annular surfaces (12, 13) of joint part (3) and the associated complementary serrated surfaces (11, 14) of legs (1, 2) being so constructed with respect to pitch and/or tooth configuration, that the joint part (3) is rigidly coupled to the legs (1, 2) by engagement of the teeth, whilst the other pair of legs (17, 18) of the two-part pipe hanger has smooth engagement surfaces and the movable connection between the joint part (3) and the legs is achieved in that the smooth engagement surfaces of legs (17, 18) are in contact with the serrated surfaces of joint part (3).

4. Pipe hanger according to one of the claims 1 to 3, characterized in that the joint part (3) has for each of its two contact areas (12, 13) with the hanger legs (1, 2) a fixed shaped threaded stud (4, 5) with nuts (6, 7), both of said studs being located in an axis (8) without passing through the joint part.

5. Pipe hanger according to one of the claims 1 to 3, characterized in that the screw (25) passes through joint part (27) and is provided with nuts (26).

6. Pipe hanger according to one of the preceding claims, characterized in that the annular serrated surfaces (11, 12, 13, 14) are provided with teeth, whose cross-sections are triangular with truncated tips (Figs 3a, 3b) or traperoidal (Figs 4a, 4b) and in which when the teeth are engaged there is always a free space (23) between the tooth tips and the tooth troughs, the sloping faces (24) being in contact with their counterparts.

7. Pipe hanger according to one of the preceding claims, characterized in that the depth of tooth of the annular serrated surfaces is constant everywhere.

8. Pipe hanger according to one of the claims 1 to 3, characterized in that the tooth configuration at the annular serrated surfaces (11, 12, 13, 14) both of joint part (3) and the hanger legs (1, 2) slopes with respect to the radii (Fig. 1) and that the tooth configuration is homologous, i. e. right-handed in the first annular serrated surface (12) of joint part (3) and left-handed in the second annular surface (13) (Figs 5a, 5b).

9. Pipe hanger according to one of the claims 1 to 3, characterized in that the tooth configuration in the annular serrated surfaces (11, 12, 13, 14) of both joint part (3) and the hanger legs (1, 2) emanates radially from the centre in the case of a uniform pitch (Fig. 6a) but the number of teeth in the annular serrated surfaces, (12, 13) of joint part (3) differs from one another and the annular serrated surfaces (11, 14) of hanger legs (1, 2) have corresponding numbers of teeth.

10. Pipe hanger according to one of the preceding claims, characterized in that at least one intermediate disk (Figs 5a, 5b) is jammed between joint part (3) and hanger legs (1, 2) and that on either side said intermediate disk has suitable teeth, particularly in the form of claim 8 on one side a right-handed and on the other side a left-handed serrated circular surface and in the case of claim 9 on both sides a course or on both sides a fine star-like tooth system with teeth passing centrally to the centre point.

11. Pipe hanger according to one of the claims 1 or 2, characterized in that in the case of a pipe hanger with two legs (Fig. 11a), the free hanger legs are provided with annular serrated surfaces and a corresponding joint part is also provided with annular serrated surfaces.

12. Pipe hanger according to one of the preceding claims, characterized in that the joint part (3, 27) has a mounting part (9, 37, 37'), which is either screwed into a threaded bore hole (10, 38) of the joint part, or is constructed in one piece therewith.

7

# 0 053 089

**Revendications**

1. Collier pour tuyauterie entre les branches (1, 2 ; 28, 29) duquel est inséré un élément de liaison (3 : 27) dont la paire de surfaces de contact (12, 13 ; 32, 33) est appliquée contre les branches (1, 2 ; 28, 29) et qui est maintenu assemblé par vis (4, 5 ; 25) et écrou (6, 7 ; 26) aux branches (1, 2 ; 28, 29) et par lequel est rendu possible, à volonté, une liaison rigide ou une liaison articulée de l'élément de liaison (3 ; 27) avec les branches (1, 2 ; 28, 29), caractérisé en ce que chacune des deux surfaces de contact de la paire de surfaces de contact comporte une surface dentée annulaire (12, 13 ; 32, 33) disposée autour de l'axe (8 ; 30) de la vis (4, 5 ; 25) et en ce qu'également chaque branche de collier (1, 2 : 28, 29) est pourvue, à sa surface de contact avec l'élément de liaison (3 ; 27), d'une surface dentée annulaire correspondante (11, 14 ; 31, 34) autour de l'axe (8 ; 30) ou du trou de passage de vis (19, 20 ; 39, 40), auquel cas les dentures des deux surfaces annulaires (12, 13 ; 32, 33) de l'élément de liaison (3 ; 27) et de la surface de denture complémentaire (11, 14 ; 31, 34), associée à celles-ci, des branches (1, 2 ; 28, 29) sont réalisées de manière différente relativement au pas et/ou à l'allure des dents, de telle façon que l'élément de liaison (3 ; 27) est, dans l'une de ses positions de montage, rigidement accouplés par enclenchement de la denture avec les branches (1, 2 ; 28, 29) et, dans la seconde position de montage lors de l'interversion des surfaces de denture (13, 12 ; 33, 32), est décalable rotativement par rapport aux branches (1, 2 ; 28, 29) par contact constant d'une partie des surfaces de sommet de dent.

2. Collier pour tuyauterie entre les branches (1, 2, 28, 29) duquel est inséré un élément de liaison (3, 27), dont la paire de surfaces de contact (12, 13 ; 32, 33) est appliquée contre les branches (1, 2 ; 28, 29) et qui est maintenu assemblé par vis (4, 5 ; 25) et écrou (6, 7 ; 26) aux branches (1, 2 ; 28, 29) et par lequel est rendue possible, à volonté, une liaison rigide ou une liaison articulée de l'élément de liaison (3 ; 27) avec les branches (1, 2 ; 28, 29), caractérisé en ce que chacune des deux surfaces de contact de la paire de surfaces de contact comporte une surface annulaire dentée (12, 13 ; 32, 33) disposée autour de l'axe (8, 30) de la vis (4, 5 ; 25) et en ce que chaque branche de collier (1, 2 ; 28, 29) est pourvue, à sa surface de contact avec l'élément de liaison (3 ; 27), d'une surface annulaire dentée correspondante (11, 14 ; 31, 34) autour de l'axe (8, 30) ou du trou de passage de vis (19, 20 ; 39, 40), auquel cas la denture des deux surfaces annulaires (12, 13 ; 32, 33) de l'élément de liaison (3 ; 27) et des surfaces de denture complémentaires (11, 14 ; 31, 34), associées à celles-ci, des branches (1, 2 ; 28, 29) sont conformées de telle façon, relativement au pas et/où à l'allure des dents, que l'élément de liaison (3 ; 27) est accouplé rigidement aux branches (1, 2 ; 28, 29) par enclenchement de la denture tandis que la liaison mobile, entre élément de liaison (3 ; 27) et les branches est obtenue par le fait que respectivement un disque intercalaire au moins unilatéralement lisse est insérable entre les deux surfaces de denture voisines (11, 12, 13, 14 ; 31, 32, 33, 34) de l'élément de liaison (3 ; 27) et les branches de collier (1, 2 ; 28, 29).

3. Collier pour tuyauterie partagé en deux, entre les branches (1, 2, 17, 18) duquel est inséré un élément de liaison (3) dont la paire de surfaces de contact est appliquée contre les branches (1, 2) et qui est maintenu assemblé par vis (4, 5) et écrou (6, 7) aux branches (1, 2) et par lequel est rendue possible, à volonté, une liaison rigide ou une liaison articulée de l'élément de liaison (3) avec les branches (1, 2, 17, 18) caractérisé en ce que chacune des deux surfaces de contact de la paire de surfaces de contact a une surface annulaire dentée (12, 13) disposée autour de l'axe (8) de la vis (4, 5) et en ce que deux branches de collier (1, 2) sont pourvues, à leur surface de contact avec l'élément de liaison (3), d'une surface annulaire dentée correspondante (11, 14) autour de l'axe (8) ou du trou de passage de vis (19, 20), auquel cas les dentures des deux surfaces annulaires (12, 13) de l'élément de liaison (3) et des surfaces de denture complémentaires (11, 14), associées à celles-ci, des branches (1, 2) sont conformées de telle façon, relativement au pas et/ou à l'allure des dents, que l'élément de liaison (3) est accouplé rigidement aux branches (1, 2) par enclenchement de la denture tandis que l'autre paire de branches (17, 18) du collier pour tuyauterie partagé en deux présente des surfaces d'appui lisses et la liaison mobile, entre l'élément de liaison (3) et les branches est obtenue par le fait que les surfaces d'appui lisses des branches (17, 18) touchent les surfaces de denture (12, 13) de l'élément de liaison (3).

4. Collier pour tuyauterie selon l'une des revendications 1 à 3, caractérisé en ce que l'élément de liaison (3), pour chacune de ses deux surfaces de contact (12, 13) avec les branches de collier (1, 2), comporte un tourillon fileté (4, 5) solidarisé par formage avec des écrous (6, 7), les deux tourillons filetés étant situés suivant un axe (8) sans traverser l'élément de liaison.

5. Collier pour tuyauterie selon l'une des revendications 1 à 3, caractérisé en ce que la vis (25) traverse l'élément de liaison (27) et est pourvue de l'écrou (26).

6. Collier pour tuyauterie selon l'une des revendications précédentes, caractérisé en ce que les surfaces annulaires dentées (11, 12, 13, 14) sont pourvues de dents dont les sections transversales sont triangulaires à pointes coupées (figures 3a, 3b) ou trapézoïdales (figures 4a, 4b) et où, à l'état enclenché de la denture, un espace libre (23) existe respectivement entre les sommets des dents et les creux des dents tandis que les surfaces obliques (24) sont en contact avec leurs contre-pièces respectives.

7. Collier pour tuyauterie selon l'une des revendications précédentes, caractérisé en ce que la hauteur de dent des surfaces annulaires dentées est partout constante.

8. Collier pour tuyauterie selon l'une des revendications 1 à 3, caractérisé en ce que l'allure des dents, sur les surfaces annulaires dentées (11, 12, 13, 14) aussi bien de l'élément de liaison (3) que des branches de collier (1, 2), est oblique par rapport aux rayons (figure 1) et en ce que l'allure des dents est symétrique, c'est-à-dire tournante à droite dans la première surface annulaire dentée (12) de l'élément de liaison (3) et tournante à gauche dans la seconde surface annulaire dentée (13) (figures 5a, 5b).

9. Collier pour tuyauterie selon l'une des revendications 1 à 3, caractérisé en ce que l'allure des dents, dans les surfaces annulaires dentées (11, 12, 13, 14) aussi bien de l'élément de liaison (3) que des branches de collier (1, 2), part de façon rayonnante du centre pour un pas uniforme (figure 8a), le nombre des dents des surfaces annulaires dentées (12, 13) de l'élément de liaison (3) est cependant différent l'un de l'autre et les surfaces annulaires dentées (11, 14) des branches de collier (1, 2) présentent des nombres de dents correspondants.

10. Collier pour tuyauterie selon l'une des revendications précédentes, caractérisé en ce que entre l'élément de liaison (3) et les branches de collier (1, 2) est coincé au moins un disque intercalaire (figures 5a ; 5b) et en ce que ce disque intercalaire porte bilatéralement des dentures appropriées et comporte, en particulier dans le cas de la revendication 8, d'un côté, une surface annulaire dentée tournant à droite et, de l'autre côté, une surface annulaire dentée tournant à gauche et, dans le cas de la revendication 9, une grosse denture dentée en étoile des deux côtés ou une fine denture en étoile des deux côtés avec des dents s'étendant centralement vers le centre.

11. Collier pour tuyauterie selon l'une des revendications 1 ou 2, caractérisé en ce que, dans le cas d'un collier pour tuyauterie à deux branches (figure 11a), les branches de collier libres sont également munies de surfaces annulaires dentées et d'un élément de liaison correspondant à surfaces annulaires dentées.

12. Collier pour tuyauterie selon l'une des revendications précédentes, caractérisé en ce que l'élément de liaison (3, 27) présente un élément de fixation (9, 37 ; 37') qui est soit vissé dans un orifice fileté (10, 38) de l'élément de liaison ou est réalisé en une seule pièce avec celui-ci.

0 053 089

Fig. 1

Fig. 2

Fig. 4a

Fig. 4b

Fig. 5a

Fig. 5b

Fig. 6

Fig. 7

Fig. 8a

Gradzahlen in gon
400 gon = 360°

Gradzahlen in gon
400 gon = 360°

16.66 gon

50 gon

12.5 gon

4.16 gon

1.16 gon

50 gon

3 gon  3 gon

12.50 gon

16.66 gon  8.32 gon

4.16 gon

3

0 053 089

Fig. 9

Fig. 10 a

Fig. 10 b

Fig. 11 a

Fig. 11 b

Fig. 11 c

4